# EUROPEAN PATENT APPLICATION

(11) **EP 3 308 665 A1**
(43) Date of publication of application: **18.04.2018**
(21) Application number: 17020030.7
(22) Date of filing: 26.01.2017
(51) Int. Cl.: A43B 3/02, A43B 13/04, A43B 23/02, B29D 35/06, B29D 35/12

(54) **COMPREHENSIVE WRAPPING AND WATERPROOF SNOW BOOTS AND PRODUCTION PROCESS THEREOF**

(30) Priority: 13.10.2016 CN 201610892054
(71) Applicant: Chen, Maoshuang, Fuzhou, Fujian (CN)
(72) Inventor: Chen, Maoshuang, Fuzhou, Fujian (CN)
(74) Representative: Meyer, Thorsten

(57) **Abstract**

Comprehensive wrapping and waterproof snow boots and a production process thereof are provided.

Each boot comprises an upper (1), a shell (2) and a sole (3), wherein the shell (2) is connected with the sole (3), and the shell (2) covers the surface of the upper (1); the upper (1) is composed of an inner bootie (11) and a vamp (12) for preventing water and siphoning; and the upper (1) is connected with the sole (3) and the shell (2) by a PU bridging layer (4). The making process is simple and can omit a sole (3) laying procedure and an upper-shell assembly procedure; the inner bootie (11) enables the upper (1) and the sole (3) to be completely attached to a last, realizes good wearing comfort and barefoot feeling, achieves maximum sports shock absorbing and assisting function and comfortably wraps the foot; and by reducing EVA & RB materials and increasing PU material, the dissolution proportion of the boots is increased, and the snow boots are more environment-friendly.

## Description

### Field of the Invention

The present invention relates to a pair of snow boots and a production process thereof, and particularly relates to a pair of comprehensive wrapping and environment-friendly snow boots and a production process thereof.

### Background of the Invention

With the requirement of customers for performance promotion of products, current traditional snow boots with incomplete waterproof performance under many conditions increasingly bother customers. The uppers and the shells of the traditional snow boots are stitched by adopting a stitching machine all the time during combination, and water seeps in the presence of needle holes, so that the snow boots are poor in water-proof and cold-proof performance under some conditions, meanwhile, the stitching procedure of the stitching machine is complex and time-consuming and needs to be accomplished by professional technicians, so the production efficiency is low.

In addition, the snow boots in the current market are mostly equipped with thick foot covers for replacing insoles, the foot covers are high in flexibility and difficult to set, and the top surfaces of the soles of the snow boots are mostly of planar structures, so that the foot covers of most snow boots at present are difficult in fitting the feet, the feet are not wrapped ideally, and the requirement for comfort is difficult to meet. Moreover, the shock absorbing performance of the foot covers is not obvious, the shock absorbing performance of snow boots mainly depends on thick soles, and the dissolubility of the foaming material and the rubber material for the soles is not ideal, so the environment friendliness is not ideal.

### Summary of the Invention

The present invention provides a pair of comprehensive wrapping and waterproof snow boots for solving the problems that most existing snow boots cannot wrap the feet in an excellent state and the environment friendliness is poor.

The present invention adopts the following technical solutions:

### Solution 1

A pair of comprehensive wrapping and waterproof snow boots, each including an upper, a shell and a sole, wherein the shell is connected with the sole into a whole, and the shell covers the surface of the upper. The upper is composed of an inner bootie and a vamp, and the vamp is the one for preventing water and siphoning. The shell and the sole form a PU bridging layer by one-step injection molding, a rubber sole sheet is arranged on the bottom surface of the sole, and the upper is connected with the sole sheet into a whole by the PU bridging layer.

More specifically, a making process for the comprehensive wrapping and waterproof snow boots includes: making an upper according to a traditional process; then wrapping a last with the upper according to a traditional molding process, putting the wrapped upper onto a PU injection molding machine, putting a rubber sole sheet into a sole mold, and debugging the sole mold to a matching and no-leaking state; performing one-step injection after the mold is closed to obtain a PU bridging layer formed by the shell and the sole, then transferring the mold to a heating box, heating the mold to 60∼80°C, foaming and curing the material for 5∼10 minutes, transferring the mold to a cooling box of -10∼0°C, and rapidly cooling the mold for 2∼5 minutes; and trimming burrs after de-molding, thus obtaining a finished snow boot product.

### Solution 2

A pair of comprehensive wrapping and waterproof snow boots, each including an upper, a shell and a sole, wherein the shell is connected with the sole into a whole, and the shell covers the surface of the upper. The upper is composed of an inner bootie and a vamp, and the vamp is the one for preventing water and siphoning. The upper is connected with the sole and the shell into a whole by a PU bridging layer.

### Further:

The inner bootie is composed of a lining and an inner pad which is formed by one-step injection molding, and the lining and the inner pad are connected into a whole by injection molding; the collar of the inner bootie is fixedly connected with the collar of the vamp, the lower edge of the vamp extends to the bottom surface of the inner pad and is fixedly connected with the inner pad, and the PU bridging layer wraps the lower edge of the vamp.

The thickness of the inner pad is 10∼20mm.

The lining is of a foot cover structure in a sock shape.

The lining is made of a warm and/or breathable fabric.

The inner pad is a PU inner pad made of a PU material, or a popcorn inner pad made of mixed PU and TPU popcorn particles.

More specifically, a making process for the comprehensive wrapping and waterproof snow boots sequentially includes the following steps:
a. inner bootie: making a 1:1 mold kernel according to the foot shape, covering the mold kernel with a lining, and conveying the mold kernel to a specified station of an injection mold; then pouring a PU raw material or a PU and TPU particle mixture into the mold cavity; transferring the mold to a heating box, heating the mold to 60∼80°C, transferring the mold after 4∼8 minutes to a cooling box of -10∼0°C, and rapidly cooling the mold for 2∼5 minutes; thus obtaining the inner bootie after de-molding;
b. upper: stitching the collar of the inner bootie with the collar of a vamp using a stitching machine according to the collar radian, and then covering the inner bootie with the vamp to obtain the upper; and
c. molding: wrapping a last with the upper according to a traditional molding process, then putting the wrapped upper onto a PU injection molding machine, and debugging a sole mold to a matching and no-leaking state; beginning injection after the mold is closed to make a PU bridging layer, then transferring the mold to the heating box, heating the mold to 60∼80°C, foaming and curing the material for 5∼10 minutes, transferring the mold to the cooling box of -10∼8°C, and rapidly cooling the mold for 2∼5 minutes; and trimming burrs after de-molding, thus obtaining a finished snow boot product.

It can be known from the above structural description of the present invention that compared with the prior art, the present invention has the following advantages:
1. The snow boot making process of the present invention is simpler than the traditional shoe making process, and can omit a sole laying procedure and an assembly procedure of the upper and the shell.
2. The mold kernel is designed and made according to the foot shape of human mechanics, and the inner bootie is made by an integral molding process in the mold, so that the foot can be placed in a most comfortable and matchable space, and the forefoot to the heel is perfectly wrapped; and the upper and the sole are completely attached to the last, so that the wearing comfort is very good and then a barefoot feeling is realized.
3. By changing the thickness, density, hardness and wrapping property of the inner pad according to different sports functions, the inner bootie achieves a maximum sports shock absorbing and assisting function and comfortably wraps the foot.
4. Manual sole laying is not needed, so that the processing efficiency is effectively improved, the problems of glue overflow, glue insufficiency and the like caused by manual sole laying are solved, and the upper is very clean and good in pull; and no glued layer exists between the upper and the sole, so that the elasticity of the sole is guaranteed.
5. The thickness 1∼3mm of the foot cover is adjusted to the thickness 10∼20mm of the inner pad of the present invention by adjusting the radian of the keel of the PU mold, and the thicknesses of the EVA sole and the RB sole sheet are reduced, so that the elasticity and the comfort of the feet in the moving process are greatly strengthened; and by reducing the consumption of EVA and RB materials and increasing the consumption of the PU material, the dissolution proportion of a pair of shoes is increased, the environment-friendly function is effectively promoted, the weight of the snow boots is also reduced, and the snow boots are more comfortable to wear.

### Brief Description of the Drawings

Fig. 1 is a schematic diagram of a right-view structure of snow boots of the present invention.
Fig. 2 is a schematic diagram of a section structure of the snow boots of embodiment 1 at the position A-A in Fig. 1.
Fig. 3 is a schematic diagram of a section structure of the snow boots of embodiment 2 at the position A-A in Fig. 1.
Fig. 4 is a schematic diagram of a right-view structure of an inner bootie of embodiment 2.
Fig. 5 is a schematic diagram of a section structure of the inner bootie of embodiment 2 at the position B-B in Fig. 4.
Fig. 6 is a schematic diagram of a right-view structure of an upper of embodiment 2.

### Detailed Description of the Embodiments

Specific embodiments of the present invention will be described below with reference to the accompanying drawings.

### Embodiment 1

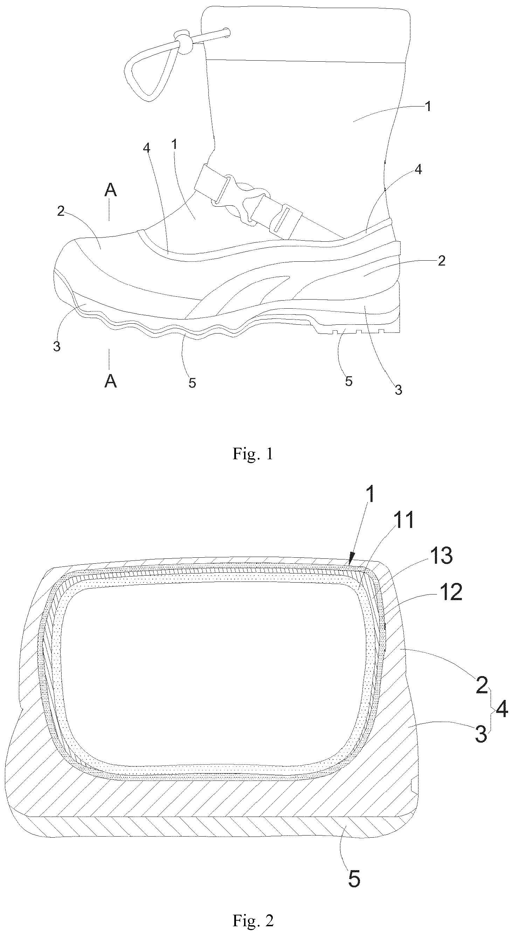

See Fig. 1 and Fig. 2, a pair of comprehensive wrapping and waterproof snow boots, each including an upper 1, a shell 2 and a sole 3, wherein the shell 2 is connected with the sole 3 into a whole, and the shell 2 covers the surface of the upper 1. The upper 1 is composed of an inner bootie 11 and a vamp 12, the vamp 12 is the one for preventing water and siphoning, the inner bootie 11 is of a thick foot cover structure, and a filling material 13 for preventing cold, absorbing shock and the like can be filled between the inner bootie 11 and the vamp 12. The shell 2 and the sole 3 form a PU bridging layer 4 by one-step injection molding, a rubber sole sheet 5 is arranged on the bottom surface of the sole 3, and the upper 1 is connected with the sole sheet 5 into a whole by the PU bridging layer 4.

More specifically, further see Fig. 1 and Fig. 2, a making process for the comprehensive wrapping and waterproof snow boots includes: making an upper 1 according to a traditional process; then wrapping a last with the upper 1 according to a traditional molding process, putting the wrapped upper 1 onto a PU injection molding machine, putting a rubber sole sheet 5 into a sole 3 mold, and debugging the sole 3 mold to a matching and no-leaking state; performing one-step injection after the mold is closed to obtain a PU bridging layer 4 formed by the shell 2 and the sole 3, then transferring the mold to a heating box, heating the mold to 60∼80°C, foaming and curing the material for 5∼10 minutes, transferring the mold to a cooling box of -10∼0°C, and rapidly cooling the mold for 2∼5 minutes; and trimming burrs after de-molding, thus obtaining a finished snow boot product.

### Embodiment 2

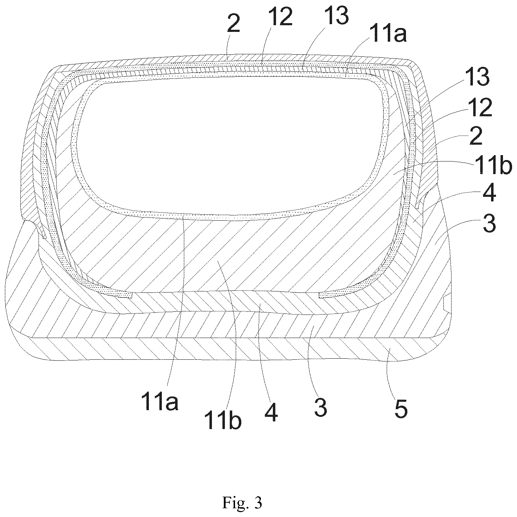

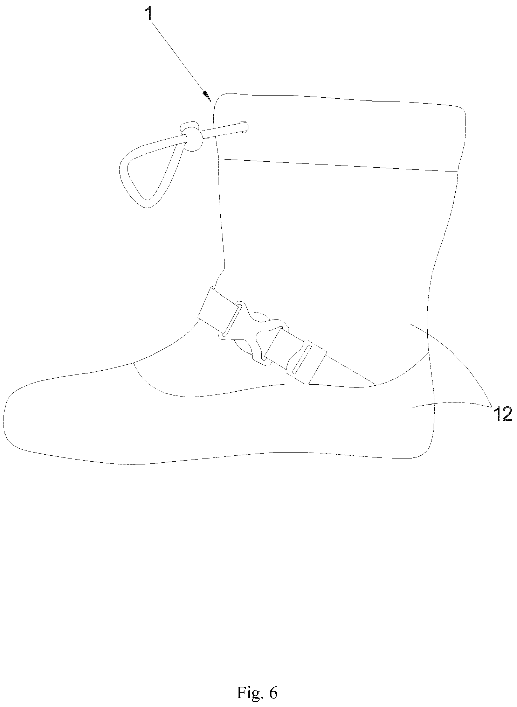

See Fig. 1 and Fig. 3, a pair of comprehensive wrapping and waterproof snow boots, each including an upper 1, a shell 2 and a sole 3, wherein the shell 2 is connected with the sole 3 into a whole, and the shell 2 covers the surface of the upper 1. See Fig. 1 and Fig. 6, the upper 1 is composed of an inner bootie 11 and a vamp 12, the vamp 12 is the one for preventing water and siphoning, and a filling material for preventing cold, absorbing shock and the like can be filled between the inner bootie 11 and the vamp 12. The upper 1 is connected with the sole 3 and the shell 2 into a whole by a PU bridging layer 4, the sole 3 is made of an EVA material, and the bottom of the sole 3 is fixedly connected with a rubber sole sheet 5.

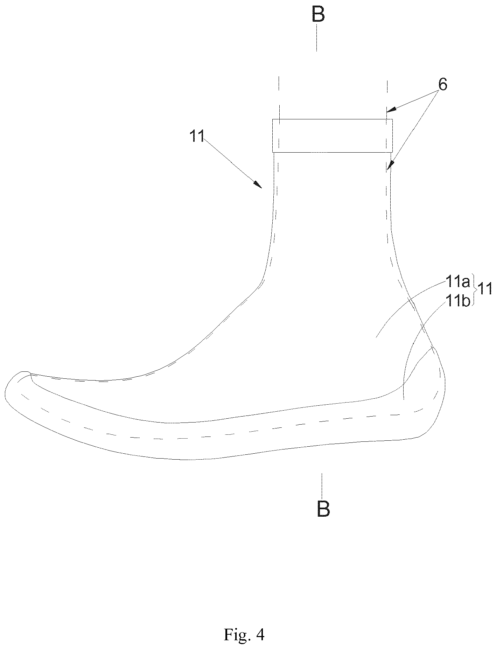

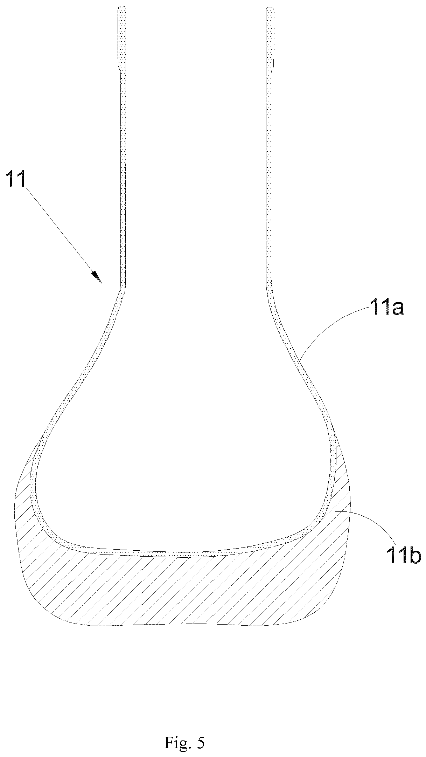

See Fig. 3, Fig. 4 and Fig. 5, the inner bootie 11 is composed of a lining 11a and an inner pad 11b which is formed by one-step injection molding, and the lining 11a and the inner pad 11b are connected into a whole by injection molding; the thickness of the inner pad 11b is 10∼20mm, and the inner pad 11b is a PU inner pad 11b made of a PU material or a popcorn inner pad 11b made of mixed PU and TPU popcorn particles; the lining 11a is of a foot cover structure in a sock shape, and the lining 11a is made of a warm and/or breathable fabric. The collar of the inner bootie 11 is fixedly connected with the collar of the vamp 12, the lower edge of the vamp 12 extends to the bottom surface of the inner pad 11b and is fixedly connected with the inner pad 11b, and the PU bridging layer 4 wraps the lower edge of the vamp 12.

More specifically, further see Fig. 1 and Fig. 3 to Fig. 6, a making process for the comprehensive wrapping and waterproof snow boots sequentially includes the following steps:
a. inner bootie 11: making a 1:1 mold kernel 6 according to the foot shape, covering the mold kernel 6 with a lining 11a, and conveying the mold kernel 6 to a specified station of an injection mold, wherein the shapes of the mold kernel 6 and the lining 11a can be adjusted according to different foot shapes; then pouring a PU raw material or a PU and TPU particle mixture into the mold cavity; transferring the mold to a heating box, heating the mold to 60∼80°C, transferring the mold after 4∼8 minutes to a cooling box of -10∼0°C, and rapidly cooling the mold for 2∼5 minutes; thus obtaining the inner bootie 11 after de-molding;
b. upper 1: stitching the collar of the inner bootie 11 with the collar of a vamp 12 using a stitching machine according to the collar radian, and then covering the inner bootie 11 with the vamp 12 to obtain the upper 1; and
c. molding: wrapping a last with the upper 1 according to a traditional molding process, then putting the wrapped upper 1 onto a PU injection molding machine, and debugging a sole 3 mold to a matching and no-leaking state; beginning injection after the mold is closed to make a PU bridging layer 4, then transferring the mold to the heating box, heating the mold to 60∼80°C, foaming and curing the material for 5∼10 minutes, transferring the mold to the cooling box of -10∼0°C, and rapidly cooling the mold for 2-5 minutes; and trimming burrs after de-molding, thus obtaining a finished snow boot product.

The snow boot making process of the present invention is simpler than the traditional shoe making process, and can omit a sole laying procedure and an assembly procedure of the upper 1 and the shell 2. Secondly, the mold kernel 6 is designed and made according to the foot shape of human mechanics, and the inner bootie 11 is made by an integral molding process in the mold, so that the foot can be placed in a most comfortable and matchable space, and the forefoot to the heel is perfectly wrapped; and the upper 1 and the sole 3 are completely attached to the last, so that the wearing comfort is very good and then a barefoot feeling is realized. Then, by changing the thickness, density, hardness and wrapping property of the inner pad 11b according to different sports functions, the inner bootie 11 achieves a maximum sports shock absorbing and assisting function and comfortably wraps the foot. In addition, manual sole laying is not needed, so that the processing efficiency is effectively improved, the problems of glue overflow, glue insufficiency and the like caused by manual sole laying are solved, and the upper 1 is very clean and good in pull; and no glued layer exists between the upper 1 and the sole 3, so that the elasticity of the sole 3 is guaranteed. Moreover, the thickness 1∼3mm of the foot cover is adjusted to the thickness 10∼20mm of the inner pad 11b of the present invention by adjusting the radian of the keel of the PU mold, and the thicknesses of the EVA sole 3 and the RB sole sheet 5 are reduced, so that the elasticity and the comfort of the feet in the moving process are greatly strengthened; and by reducing the consumption of EVA and RB materials and increasing the consumption of the PU material, the dissolution proportion of a pair of shoes is increased, the environment-friendly function is effectively promoted, the weight of the snow boots is also reduced, and the snow boots are more comfortable to wear.

Described above are merely specific embodiments of the present invention, but the design concept of the present invention is not limited thereto. All insubstantial modifications made to the present invention using the concept are the behaviors of infringing the protection scope of the present invention.

## Claims

1. A pair of comprehensive wrapping and waterproof snow boots, each comprising an upper, a shell and a sole, wherein the shell is connected with the sole into a whole, and the shell covers the surface of the upper; the upper is composed of an inner bootie and a vamp, and the vamp is the one for preventing water and siphoning; and the upper is connected with the sole and the shell into a whole by a PU bridging layer.

2. The comprehensive wrapping and waterproof snow boots of claim 1, wherein the shell and the sole form the PU bridging layer by one-step injection molding, and a rubber sole sheet is arranged on the bottom surface of the sole.

3. The comprehensive wrapping and waterproof snow boots of claim 1, wherein the inner bootie is composed of a lining and an inner pad which is formed by one-step injection molding, and the lining and the inner pad are connected into a whole by injection molding; the collar of the inner bootie is fixedly connected with the collar of the vamp, the lower edge of the vamp extends to the bottom surface of the inner pad and is fixedly connected with the inner pad, and the PU bridging layer wraps the lower edge of the vamp.

4. The comprehensive wrapping and waterproof snow boots of claim 3, wherein the thickness of the inner pad is 10∼20mm.

5. The comprehensive wrapping and waterproof snow boots of claim 3, wherein the lining is of a foot cover structure in a sock shape.

6. The comprehensive wrapping and waterproof snow boots of claim 3, wherein the lining is made of a warm and/or breathable fabric.

7. The comprehensive wrapping and waterproof snow boots of claim 3, wherein the inner pad is a PU inner pad made of a PU material, or a popcorn inner pad made of mixed PU and TPU popcorn particles.

8. A making process for the comprehensive wrapping and waterproof snow boots of claim 2 comprises:
a. upper: making an upper according to a traditional process; and
b. molding: wrapping a last with the upper according to a traditional molding process, putting the wrapped upper onto a PU injection molding machine, putting a rubber sole sheet into a sole mold, and then debugging the sole mold to a matching and no-leaking state; performing one-step injection after the mold is closed to obtain a PU bridging layer formed by the shell and the sole, then transferring the mold to a heating box, heating the mold to 60∼80°C, foaming and curing the material for 5∼10 minutes, transferring the mold to a cooling box of -10∼0°C, and rapidly cooling the mold for 2∼5 minutes; and trimming burrs after de-molding, thus obtaining a finished snow boot product.

9. A making process for comprehensive wrapping and waterproof snow boots, wherein the making process is used for making the snow boots of any of claims 3-7, and sequentially comprises the following steps:
a. inner bootie: making a 1:1 mold kernel according to the foot shape, covering the mold kernel with a lining, and conveying the mold kernel to a specified station of an injection mold; then pouring a PU raw material or a PU and TPU particle mixture into the mold cavity; transferring the mold to a heating box, heating the mold to 60∼80°C, transferring the mold after 4∼8 minutes to a cooling box of -10∼0°C, and rapidly cooling the mold for 2∼5 minutes; thus obtaining the inner bootie after de-molding;
b. upper: stitching the collar of the inner bootie with the collar of a vamp using a stitching machine according to the collar radian, and then covering the inner bootie with the vamp to obtain the upper; and
c. molding: wrapping a last with the upper according to a traditional molding process, then putting the wrapped upper onto a PU injection molding machine, and debugging a sole mold to a matching and no-leaking state; beginning injection after the mold is closed to make a PU bridging layer, then transferring the mold to the heating box, heating the mold to 60∼80°C, foaming and curing the material for 5∼10 minutes, transferring the mold to the cooling box of -10∼0°C, and rapidly cooling the mold for 2∼5 minutes; and trimming burrs after de-molding, thus obtaining a finished snow boot product.
